# EUROPEAN PATENT SPECIFICATION

(11) **EP 1 446 367 B1**
(45) Date of publication and mention of the grant of the patent: **20.09.2006**
(21) Application number: 02780162.0
(22) Date of filing: 12.11.2002
(51) Int. Cl.: C04B 40/02

(54) **METHOD OF HARDENING A FLUID MASS**
VERFAHREN ZUR ERHÄRTUNG VON EINER FLÜSSIGEN MASSE
PROCEDE DE DURCISSEMENT D'UNE MASSE LIQUIDE

(30) Priority: 12.11.2001 NL 1019349
(43) Date of publication of application: 18.08.2004
(73) Proprietor: Technische Universiteit Delft, 2628 BL Delft (NL)
(72) Inventor: ZITHA, Pacelli, Lidio, Jose, NL-2625 LK Delft (NL); JANSEN, Johan, Dirk, NL-2612 HG Delft (NL)
(74) Representative: Kupecz, Arpad
(86) International application number: PCT/NL2002/000729
(87) International publication number: WO 2003/042125

(56) References cited:
- US-A- 4 802 534
- US-A- 5 645 752
- DATABASE WPI Section PQ, Week 198718 Derwent Publications Ltd., London, GB; Class Q49, AN 1987-128070 XP002249084 & SU 1 257 192 A (ZAVAROV V A) 15 September 1986 (1986-09-15)
- DATABASE WPI Section PQ, Week 199139 Derwent Publications Ltd., London, GB; Class Q49, AN 1991-286323 XP002249085 & SU 1 620 635 A (BOIKO M D) 7 January 1991 (1991-01-07) -& SU 1 620 635 A (VOENNUYI INZNENERNUYI KRADZNOZ) 15 January 1991 (1991-01-15)

## Description

The present invention relates to method of preventing gas migration by hardening a fluid mass in contact with a wall.

Such a method is generally known, for example, for setting concrete in bore holes. An example of such an application is the introduction of a pipe structure in bore holes. Such a pipe structure is needed to prevent the collapse of the bore hole. A cylindrical metal pipe is lowered into the bore hole to the desired depth, after which cement is pumped via the bore hole through the lowered pipe. Via the bottom end of the pipe the cement flows upward around the outer wall of the pipe. This provides a seal around the pipe. In a soil stratum comprising high-pressure gas the gas may penetrate into the not yet set cement, thereby weakening it. This phenomenon is called gas migration. Due to the weakening it becomes possible for gas to escape from the bore hole in an uncontrolled manner.

It is the object of the present invention to provide a method of preventing gas migration effectively.

To this end the method according to the present invention is characterised in that the fluid mass is a magneto-rheological fluid mixture that in addition to at least one hardening component comprises a particulate magnetic component, with minimally 80% of those particles having a particle size of at least 0.0005 mm,
- the fluid mixture is brought into a desired shape, and
- a magnetic field is applied for a sufficient length of time to achieve the desired strength by setting in the absence of a magnetic field.

By applying a magnetic field it is possible to prevent the fluid mass from acquiring an undesirable shape before setting, while achieving that it is able to bear a force immediately after application and preventing gas migration around a pipe for the formation of a cylindrical wall part of a bored well.

According to a first embodiment, the hardening component comprises a fluid cement or fluid concrete.

Such a method is useful for the problems of gas migration described above. The wall is formed by a part of the casing of the bore hole, and possibly also by the rock surrounding it. When speaking of a desired shape in the present invention, it is not necessary for the entire shape of the set fluid to be known beforehand, rather it suffices if at least a part has a desired shape, as in this case determined by the wall of the casing. In addition, the method is useful for civil engineering constructions such as buildings and tunnels. The method is believed to be especially advantageous if these are made by means of slide forming. The method is also useful for forming concrete construction elements such as floor and wall components and piles. The resulting elements can be taken from the place of manufacture to another site sooner, for example to a site where they are allowed to finish setting.

US 4,802,534 describes a method in which a cement-comprising fluid is used to provide a bored well with cement. The cementitious fluid is a ferrofluid comprising particles up to 4000 Å. A ferrofluid is a fluid that can move under the influence of a (alternating) magnetic field. In contrast with the composition described in US 4,802,534, the method according to the invention makes it possible to prevent gas migration and the ensuing weakening. Experiments have shown that by applying a magnetic field according to the invention, the viscosity of the mixture was increased by a factor of >25.

According to an alternative embodiment the hardening component is molten plastic, and hardening occurs as a result of the molten plastic cooling down.

This method makes it possible among other things to manufacture large thermoplastic objects that may be removed from the mould quickly.

For the manufacture of plastic products the hardening component may comprise a polymerisable compound, which is cured by means of polymerisation. Instead of that, or in addition, the curing component may comprise a cross-linkable polymer, and curing occurs by cross-linking of the polymer.

The magnetic component may be any magnetic component, e.g. a paramagnetic component, and preferably a ferromagnetic component. It will be clear to the person not skilled in the art that the amount of magnetic component may vary widely, depending on the requirements with regard to mouldability during curing. Furthermore, if the content of magnetic component is low, a stronger magnetic field may be applied, and vice versa. The fluid mixture suitably comprises 2 to 50% vol./vol., and preferably 10 to 45% vol./vol. of a magnetic component chosen from iron, cobalt and/or vanadium.

According to common practice in the art, the percentage relates to the weight of the particles. The size of at least 80% of the particles of the particulate component is between 0.0005 and 5 mm, preferably between 0.005 and 0.5 mm.

It is essential that the particles exhibit sufficient interaction (cohesion/adhesion) with the surrounding curable fluid to influence the flow behaviour. The viscosity must be increased at least ten-fold, at the chosen field intensity. The particles may optionally be provided with a coating, or included in a larger object such as a sphere. Optionally, a coating may be provided to protect the particles from oxidation. In this way a limited amount of the actual magnetic component may still have a considerable effect on the fluid mass, and this may be cost-effective.

During hardening, the applied magnetic field usually has an intensity of at least 0.01 Tesla, and preferably at least 0.05, for example 0.05 to 0.5 Tesla.

Obviously, a suitable magnetic field depends on the fluid mass in question. Simple experiments will enable the ordinary person skilled in the art to determine a suitable magnetic field intensity. Lower contents of magnetic particles will generally require higher magnetic field intensities.

If the magnetic field is generated electrically, it is possible to save electricity by initially applying a stronger magnetic field, and reducing the intensity once the fluid mass is set to some extent. With slide forming techniques a permanent magnet may be used, which will gradually become further removed from fluid mass applied earlier, and which is thus in a more advanced stage of hardening.

According to one particular embodiment the fluid mixture is supplied via a nozzle that is screened from a magnetic field.

This makes it possible to have a permanent magnetic field without impeding the supply of fluid mixture. A suitable screening material is mu-metal.

## Claims

1. A method of preventing gas migration by hardening a fluid mass in contact with a wall, wherein the fluid mass is a magneto-rheological fluid mixture that in addition to at least one hardening component comprises a particulate magnetic component, with minimally 80% of those particles having a particle size of at least 0.0005 mm,
- the fluid mixture is brought into a desired shape, and
- a magnetic field is applied for a sufficient length of time to achieve the desired strength by hardening in the absence of a magnetic field.

2. A method according to claim 1, **characterised in that** the hardening component comprises a fluid cement or fluid concrete.

3. A method according to claim 1, **characterised in that** the hardening component is molten plastic, and hardening occurs as a result of the molten plastic cooling down.

4. A method according to claim 1, **characterised in that** the hardening component comprises a polymerisable compound, which is cured by means of polymerisation.

5. A method according to claim 1, **characterised in that** the hardening component comprises a cross-linkable polymer, and curing occurs by cross-linking of the polymer.

6. A method according to one of the preceding claims, **characterised in that** the fluid mixture comprises 10 to 45% vol./vol. of a magnetic component chosen from iron, cobalt and/or vanadium.

7. A method according to one of the preceding claims, **characterised in that** minimally 80% of the particles of the particulate component have a particle size between 0.005 to 0.5 mm.

8. A method according to one of the preceding claims, **characterised in that** during hardening, the applied magnetic field has an intensity of at least 0.05 Tesla.

9. A method according to one of the preceding claims, **characterised in that** the applied magnetic field is initially stronger, and it's intensity is reduced once the fluid mass is set to some extent.

10. A method according to one of the preceding claims, **characterised in that** the fluid mixture is supplied via a nozzle that is screened from a magnetic field.

## Patentansprüche

1. Verfahren zum Verhindern von Gasmigration durch Aushärten einer mit einer Wandung in Kontakt stehenden fluiden Masse, wobei die fluide Masse eine magnetorheologische fluide Mischung ist, die zusätzlich zu zumindest einer Härtungskomponente eine teilchenförmige magnetische Komponente enthält, und minimal 80% dieser Teilchen eine Teilchengröße von zumindest 0,0005 mm aufweisen,
- die fluide Mischung in eine gewünschte Form gebracht wird, und
- ein magnetisches Feld über einen ausreichenden Zeitraum angelegt wird, um durch Aushärten die gewünschte Festigkeit bei Abwesenheit eines magnetischen Feldes zu erreichen.

2. Verfahren nach Anspruch 1,
**dadurch gekennzeichnet,**
**dass** die Härtungskomponente einen flüssigen Zement oder einen flüssigen Beton enthält.

3. Verfahren nach Anspruch 1,
**dadurch gekennzeichnet,**
**dass** die Härtungskomponente geschmolzener Kunststoff ist, und das Aushärten als ein Ergebnis des abkühlenden geschmolzenen Kunststoffs erfolgt.

4. Verfahren nach Anspruch 1,
**dadurch gekennzeichnet,**
**dass** die Härtungskomponente eine polymerisierbare Verbindung enthält, die mittels Polymerisation aushärtet.

5. Verfahren nach Anspruch 1,
**dadurch gekennzeichnet,**
**dass** die Härtungskomponente ein quer vernetzbares Polymer enthält und ein Aushärten durch Quervernetzen des Polymers erfolgt.

6. Verfahren nach einem der vorhergehenden Ansprüche,
**dadurch gekennzeichnet,**
**dass** die fluide Mischung 10 bis 45 Volumen-% einer magnetischen Komponente enthält, die ausgewählt ist aus Eisen, Kobalt und/oder Vanadium.

7. Verfahren nach einem der vorhergehenden Ansprüche,
**dadurch gekennzeichnet,**
**dass** minimal 80% der Teilchen der teilchenförmigen Komponente eine Teilchengröße zwischen 0,005 bis 0,5 mm aufweisen.

8. Verfahren nach einem der vorhergehenden Ansprüche,
**dadurch gekennzeichnet,**
**dass** während des Aushärtens das angelegte magnetische Feld eine Intensität von mindestens 0,05 Tesla aufweist.

9. Verfahren nach einem der vorhergehenden Ansprüche,
**dadurch gekennzeichnet,**
**dass** das angelegte magnetische Feld anfänglich stärker ist, und dessen Intensität verringert wird, sobald die fluide Masse bis zu einem bestimmten Grad ausgehärtet ist.

10. Verfahren nach einem der vorhergehenden Ansprüche,
**dadurch gekennzeichnet,**
**dass** die fluide Mischung über eine Düse zugeführt wird, die von einem magnetischen Feld abgeschirmt ist.

## Revendications

1. Procédé permettant d'empêcher la migration des gaz par le durcissement d'une masse fluide en contact avec un mur, dans lequel la masse fluide représente un mélange de fluides magnéto-rhéologiques qui, en plus d'au moins un composant durcisseur, comporte un composant magnétique sous forme de particules, dont au moins 80% de ces particules présentent une dimension d'au moins 0,0005 mm,
- le mélange de fluides est introduit sous une forme souhaitée,
- et, un champ magnétique est appliqué pendant une durée suffisamment longue pour obtenir la résistance souhaitée par le fait de durcir en l'absence d'un champ magnétique.

2. Procédé selon la revendication 1, **caractérisé en ce que** le composant durcisseur comporte un ciment fluide ou un béton fluide.

3. Procédé selon la revendication 1, **caractérisé en ce que** le composant durcisseur représente une matière plastique fondue, et le durcissement se produit en raison du refroidissement de la matière plastique fondue.

4. Procédé selon la revendication 1, **caractérisé en ce que** le composant durcisseur comporte un composé polymérisable qui est durci au moyen d'une réaction de polymérisation.

5. Procédé selon la revendication 1, **caractérisé en ce que** le composant durcisseur comporte un polymère réticulable, et le durcissement se produit en raison de la réticulation du polymère.

6. Procédé selon l'une quelconque des revendications précédentes, **caractérisé en ce que** le mélange de fluides comprend de 10 % à 45 % v/v d'un composant magnétique choisi parmi du fer, du cobalt et du vanadium.

7. Procédé selon l'une quelconque des revendications précédentes, **caractérisé en ce que** la dimension d'au moins 80 % des particules du composant particulaire vaut de 0,005 à 0,5 mm.

8. Procédé selon l'une quelconque des revendications précédentes, **caractérisé en ce que**, pendant le durcissement, le champ magnétique appliqué a une intensité d'au moins 0,05 Tesla.

9. Procédé selon l'une quelconque des revendications précédentes, **caractérisé en ce que**, au départ, le champ magnétique appliqué est plus fort, et son intensité est réduite lorsque que la masse fluide a pris jusqu'à un certain point.

10. Procédé selon l'une quelconque des revendications précédentes, **caractérisé en ce que** le mélange de fluides est fourni via une buse qui est protégée du champ magnétique.
